# DEMANDE DE BREVET EUROPEEN

(11) **EP 1 013 494 A2**
(43) Date de publication de la demande: **28.06.2000**
(21) Numéro de dépôt: 99403223.3
(22) Date de dépôt: 20.12.1999
(51) Int. Cl.: B60K 6/02

(54) **Dispositif de traction du type "hybride parallèle" notamment pour véhicule automobile**

(30) Priorité: 21.12.1998 FR 9816130
(71) Demandeur: RENAULT, 92109 Boulogne-Billancourt (FR)
(72) Inventeur: Achard, Alain, 92500 Rueil Malmaison (FR)

(57) **Abrégé**

Ce dispositif de traction du type « hybride parallèle », notamment pour véhicule automobile, comprend:
a) une chaîne de traction mécanique comportant un moteur thermique (MT), un système de transmission comportant au moins un arbre de transmission primaire (1) pouvant être couplé mécaniquement audit moteur (MT) et au moins un arbre de transmission secondaire (2) pouvant être couplé mécaniquement audit arbre de transmission primaire (1) pour entraîner au moins une roue (9) dudit véhicule,
b) une machine électrique pouvant fonctionner en moteur ou en alternateur (ME), pouvant sélectivement combiner sa puissance mécanique à celle de ladite chaîne de traction mécanique, ou utiliser au moins une partie de la puissance mécanique de cette chaîne pour recharger des moyens de stockage d'énergie électrique tels que des batteries.

Ce dispositif est remarquable en ce que ladite machine électrique (ME) peut être sélectivement couplée mécaniquement audit arbre de transmission primaire (1) ou audit arbre de transmission secondaire (2).

## Description

La présente invention est relative à un dispositif de traction du type « hybride parallèle », notamment pour véhicule automobile.

On connaît de la technique antérieure de tels dispositifs, comprenant:
a) une chaîne de traction mécanique comportant un moteur thermique, un système de transmission comportant au moins un arbre de transmission primaire pouvant être couplé mécaniquement audit moteur et au moins un arbre de transmission secondaire pouvant être couplé mécaniquement audit arbre de transmission primaire pour entraîner au moins une roue dudit véhicule, et
b) une machine électrique fonctionnant en moteur ou en alternateur, pouvant sélectivement combiner sa puissance mécanique à celle de ladite chaîne de traction mécanique, ou utiliser au moins une partie de la puissance mécanique de cette chaîne pour recharger des moyens de stockage d'énergie électrique tels que des batteries.

Parmi ces dispositifs de la technique antérieure, on trouve deux catégories.

La première catégorie comprend les dispositifs dans lesquels la machine électrique peut être couplée mécaniquement à l'arbre de transmission primaire du système de transmission. Ces dispositifs permettent d'utiliser une machine électrique de puissance relativement faible, donc peu encombrante. Ils permettent également de démarrer le moteur thermique ainsi que de recharger les moyens de stockage d'énergie électrique sans être pénalisé par le rendement du système de transmission.

La seconde catégorie comprend les dispositifs dans lesquels la machine électrique peut être couplée mécaniquement à l'arbre de transmission secondaire du système de transmission. Ces dispositifs permettent de maintenir la continuité de la traction lors d'un changement de vitesse, et ainsi de supprimer la sensation de décélération à cet instant. Ils permettent également de transmettre la puissance mécanique de la machine électrique aux roues ainsi que de récupérer l'énergie de freinage sans être pénalisé par le rendement du système de transmission.

La présente invention a pour but de fournir un dispositif de traction du type « hybride parallèle » permettant de combiner, de manière simple, peu encombrante et peu onéreuse, les avantages des dispositifs de chacune des deux catégories susmentionnées.

On atteint ce but de l'invention, ainsi que d'autres qui apparaîtront à la lecture de ce qui va suivre, avec un dispositif de traction du type « hybride parallèle », notamment pour véhicule automobile, comprenant:
a) une chaîne de traction mécanique comportant un moteur thermique, un système de transmission comportant au moins un arbre de transmission primaire pouvant être couplé mécaniquement audit moteur et au moins un arbre de transmission secondaire pouvant être couplé mécaniquement audit arbre de transmission primaire pour entraîner au moins une roue dudit véhicule,
b) une machine électrique fonctionnant en moteur ou en alternateur, pouvant sélectivement combiner sa puissance mécanique à celle de ladite chaîne de traction mécanique, ou utiliser au moins une partie de la puissance mécanique de cette chaîne pour recharger des moyens de stockage d'énergie électrique tels que des batteries,
ce dispositif étant remarquable en ce que ladite machine électrique peut être sélectivement couplée mécaniquement audit arbre de transmission primaire ou audit arbre de transmission secondaire.

Suivant d'autre caractéristiques du dispositif selon l'invention:
- ladite machine électrique est couplée mécaniquement à des premier et deuxième pignons montés fous respectivement sur lesdits arbres de transmission primaire et secondaire, et lesdits pignons peuvent être crabotés sélectivement sur lesdits arbres,
- ladite machine électrique est montée coaxialement sur ledit arbre de transmission primaire, en prise directe avec ledit premier pignon fou,
- lesdits moyens d'accouplement mécanique dudit arbre de transmission primaire audit moteur thermique sont placés entre ledit moteur thermique et ladite machine électrique,
- ledit système de transmission est du type à poulies et à courroie, c'est-à-dire du type à Transmission Variable Continue (CVT),
- ledit système de transmission est une boîte de vitesses,
- ladite boîte de vitesses et les moyens pour craboter lesdits premier et deuxième pignons fous sont robotisés,
- lesdits moyens d'accouplement mécanique dudit arbre de transmission primaire audit moteur thermique sont un embrayage.

Grâce à ces caractéristiques, on peut optimiser le bilan énergétique d'un dispositif du type « hybride parallèle », et on peut supprimer la sensation de décélération lors d'un changement de vitesse, tout en n'utilisant qu'une seule machine électrique de puissance relativement faible.

D'autres caractéristiques et avantages de la présente invention apparaîtront à la lecture de la description qui va suivre et à l'examen du dessin annexé, dans lequel:
- la figure 1 représente schématiquement le dispositif selon l'invention avec ses moyens de commande, tous les moyens de couplage mécanique étant en position découplée,
- la figure 2 représente schématiquement le dispositif selon l'invention sans ses moyens de commande en configuration de démarrage ou de fonctionnement au ralenti,
- la figure 3 est analogue à la figure 2, à ceci près que le dispositif selon l'invention est représenté en configuration de fonctionnement « tout thermique » ou « thermique + électrique »,
- la figure 4 représente une deuxième configuration possible de fonctionnement « tout thermique » ou « thermique + électrique »,
- la figure 5 est analogue aux figures 2 à 4, à ceci près que le dispositif selon l'invention est représenté en configuration de fonctionnement « tout électrique » ou « de freinage à récupération d'énergie».

Sur ces figures, des références numériques identiques désignent des organes ou ensembles d'organes identiques ou analogues.

Dans ce qui suit, on va décrire le dispositif selon l'invention lorsqu'il est appliqué à un véhicule automobile, car il se trouve qu'il est particulièrement adapté à cet usage.

Il ne faut cependant pas perdre de vue le fait que ce dispositif pourrait être appliqué à d'autres domaines dans lesquels il peut également s'avérer intéressant d'utiliser un dispositif de traction du type « hybride parallèle ».

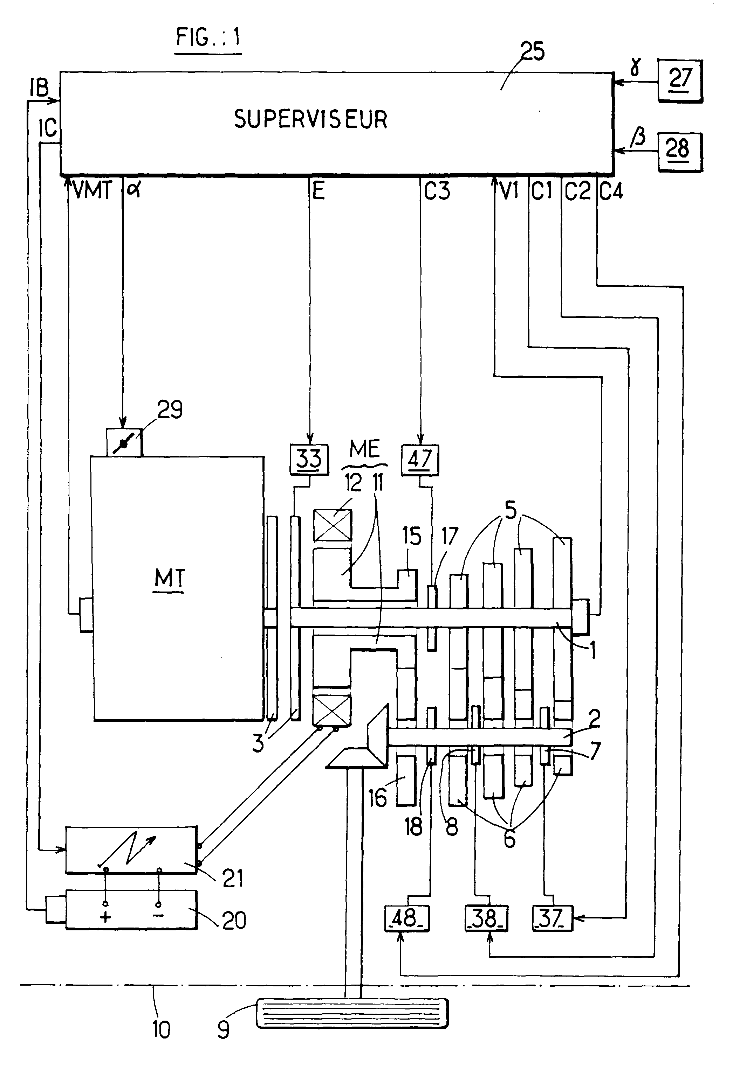

On se réfère à présent à la figure 1 du dessin annexé, sur laquelle on voit que le dispositif selon l'invention comprend une chaîne de traction mécanique comportant un moteur thermique MT, et une boîte de vitesses comprenant au moins un arbre de transmission primaire 1 et au moins un arbre de transmission secondaire 2.

L'arbre de transmission primaire 1 peut être couplé mécaniquement au moteur thermique MT par des moyens tels qu'un embrayage 3.

L'arbre de transmission secondaire 2 peut être couplé mécaniquement à l'arbre de transmission primaire 1 selon différents rapports de vitesses grâce à des premier 5 et deuxième 6 trains de pignons montés respectivement solidaires sur l'arbre de transmission primaire 1 et fous sur l'arbre de transmission secondaire 2.

Dans le mode de réalisation représenté, les premier 5 et deuxième 6 trains de pignons comportent chacun quatre pignons, ce qui correspond à une boîte de vitesses à quatre rapports.

Le couplage mécanique sélectif des quatre pignons du deuxième train 6 à l'arbre de transmission secondaire 2 s'effectue avec des premier 7 et deuxième 8 crabots montés coulissants et solidaires en rotation sur cet arbre.

L'arbre de transmission secondaire 2 entraîne au moins une roue 9 d'un véhicule automobile 10. Si le véhicule comporte deux roues motrices ou plus, cet entraînement peut s'effectuer par l'intermédiaire d'un différentiel (non représenté).

Le dispositif selon l'invention comporte par ailleurs une machine électrique ME comprenant un rotor 11 et un stator 12. Le rotor 11 est monté coaxialement et libre en rotation sur l'arbre de transmission primaire 1, entre l'embrayage 3 et le premier train de pignons 5.

Un premier pignon 15 est monté solidaire sur le rotor 11. Ce pignon est donc monté fou sur l'arbre de transmission primaire 1.

Ce premier pignon fou 15 coopère avec un deuxième pignon 16 monté fou sur l'arbre de transmission secondaire 2.

Chacun de ces deux pignons peut être sélectivement craboté sur les arbres de transmission primaire 1 et secondaire 2 respectivement grâce à des crabots 17, 18 montés coulissants et solidaires en rotation sur ces arbres.

La machine électrique ME peut sélectivement fonctionner comme moteur électrique ou comme alternateur. Lorsqu'elle fonctionne comme moteur électrique, elle est alimentée par des moyens de stockage d'énergie électrique tel que des batteries 20, par l'intermédiaire d'un convertisseur 21. Inversement, lorsqu'elle fonctionne comme alternateur, elle recharge cette batterie en énergie électrique.

Le dispositif selon l'invention est, de préférence, commandé par un calculateur électronique numérique dûment programmé 25, appelé dans la suite « superviseur ». On dit dans ce cas que ce dispositif est « robotisé ».

Le superviseur 25 permet de gérer les différents mode de fonctionnement possibles du dispositif selon l'invention, dans le but d'offrir à l'utilisateur le maximum de confort de conduite tout en optimisant le bilan énergétique du dispositif.

La stratégie de commande du superviseur 25 s'appuie sur la connaissance de divers paramètres, notamment:
- la demande de couple moteur formulée par le conducteur du véhicule, telle que cette demande est traduite par l'enfoncement γ d'une pédale d'accélérateur 27,
- l'intensité du freinage, telle qu'elle est traduite par l'enfoncement β d'une pédale de freinage 28,
- l'état de charge des batteries 20, connu par l'intensité IB qu'elles délivrent et par leur capacité,
- la vitesse de rotation VMT du moteur thermique MT, et
- la vitesse de rotation V1 de l'arbre de transmission primaire 1.

Le superviseur 25 agit sur le moteur thermique MT, sur la machine électrique ME, sur l'embrayage 3, sur les crabots 7, 8, 17, 18 par l'élaboration de signaux appropriés de commande, respectivement, de l'angle d'ouverture α d'un papillon des gaz motorisé 29, du courant IC sortant du ou arrivant au convertisseur 21, de l'état E d'un actuateur d'embrayage 33, et des états C1, C2, C3, C4 d'actuateurs de crabots 37, 38, 47, 48.

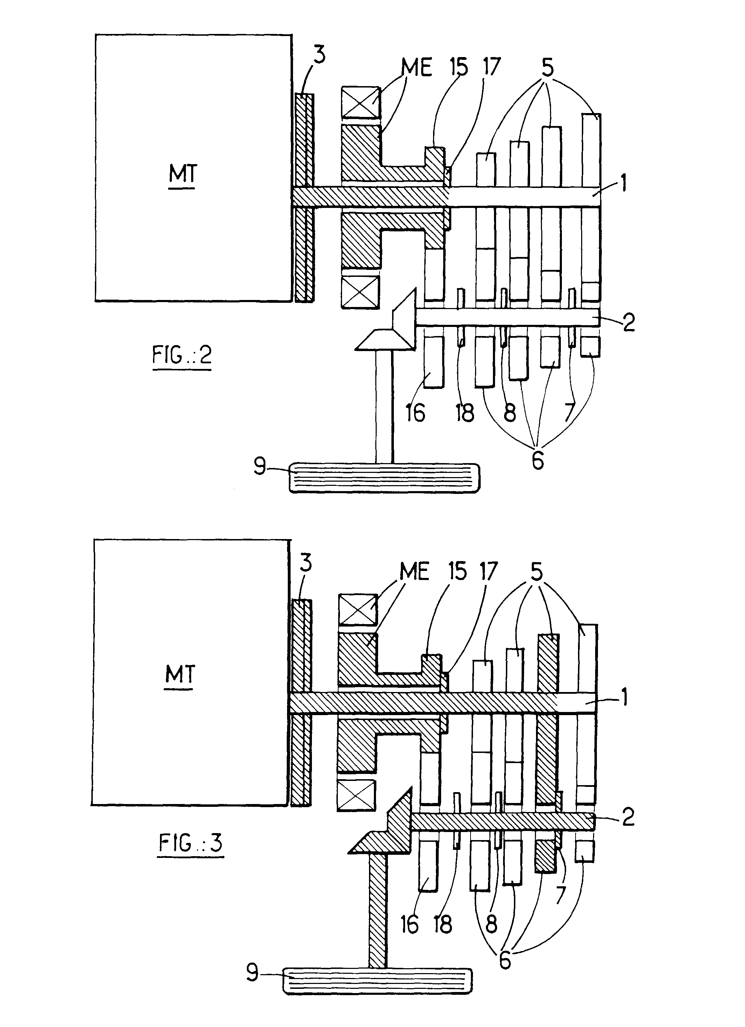

On se reporte à présent aux figures 2 à 5, sur lesquelles on a représenté le dispositif selon l'invention dans différentes configurations de fonctionnement. Sur ces figures, les organes actifs, c'est-à-dire ceux qui transmettent des couples, sont représentés avec une trame.

Sur la figure 2, le dispositif selon l'invention est représenté en configuration de démarrage ou de fonctionnement au ralenti.

Dans cette configuration, l'embrayage 3 est en position embrayée, le premier pignon fou 15 est craboté sur l'arbre de transmission primaire 1 par le crabot 17, et les autres crabots 7, 8 et 18 ne crabotent pas.

Cette configuration permet:
- de démarrer le moteur thermique MT avec la machine électrique ME, cette dernière fonctionnant alors en moteur électrique, ou
- de charger les batteries du véhicule automobile lorsqu'il est arrêté et que le moteur thermique MT tourne au ralenti, la machine électrique ME fonctionnant alors en alternateur.

Dans les deux cas, on évite de passer par les premier 5 et deuxième 6 trains de pignons, ce qui évite toute déperdition inutile d'énergie par frottement.

Sur la figure 3, le dispositif selon l'invention est représenté en configuration de fonctionnement « tout thermique » ou « thermique + électrique ».

Dans cette configuration, l'embrayage 3 est en position embrayée, le premier pignon fou 15 est craboté sur l'arbre de transmission primaire 1 par le crabot 17, l'un des pignons du deuxième train 6 est craboté sur l'arbre de transmission secondaire 2 par exemple par le crabot 7, et les autres crabots 8, 18 ne crabotent pas.

Cette configuration permet:
- de propulser le véhicule automobile en mode « tout thermique », c'est-à-dire uniquement à partir de la puissance fournie par le moteur thermique MT, une partie de la puissance de ce moteur étant par ailleurs utilisée pour faire tourner la machine électrique ME (qui fonctionne alors en alternateur) afin de recharger les batteries, ou
- de propulser le véhicule automobile en mode « thermique + électrique », c'est-à-dire en combinant les puissances fournies par le moteur thermique MT et la machine électrique ME (qui fonctionne alors en moteur électrique).

Le mode de propulsion « thermique + électrique » convient aux situations de forte demande de couple moteur, telles que les situations où le conducteur cherche à dépasser un autre véhicule.

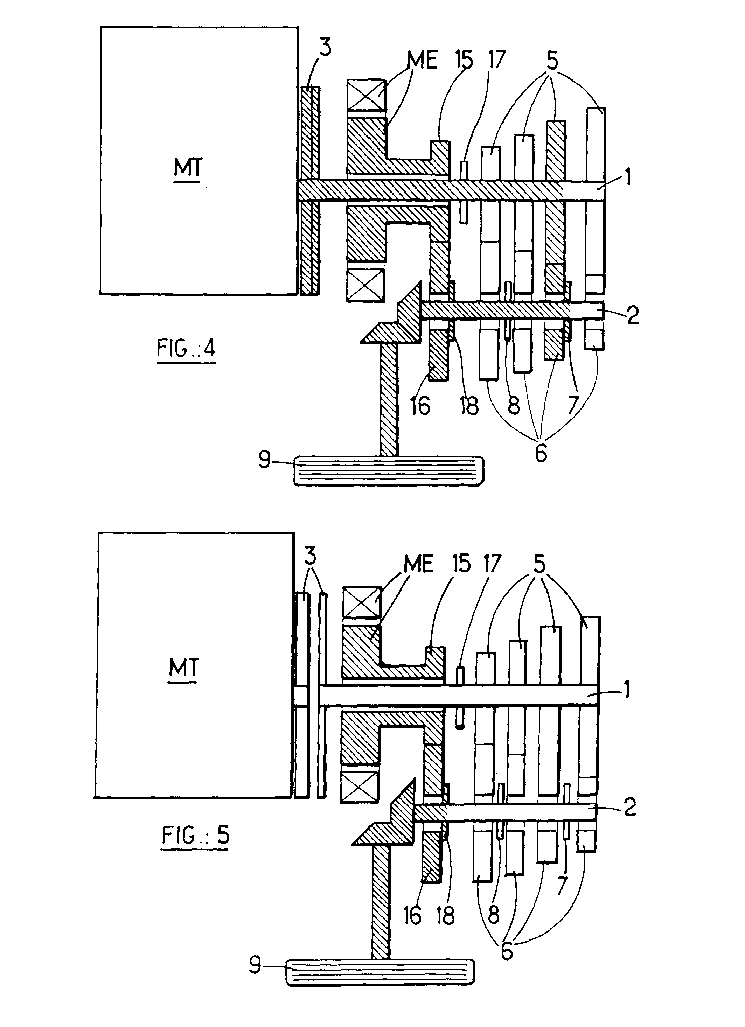

Sur la figure 4, le dispositif selon l'invention est représenté dans une autre configuration de fonctionnement « tout thermique » ou « thermique + électrique ».

Dans cette configuration, l'embrayage 3 est en position embrayée, le deuxième pignon fou 16 est craboté sur l'arbre de transmission secondaire 2 par le crabot 18, l'un des pignons du deuxième train 6 est craboté sur cet arbre par exemple par le crabot 7, et les autres crabots 8, 17 ne crabotent pas.

Cette configuration peut s'avérer plus adaptée que la précédente pour propulser le véhicule en mode « thermique » ou « thermique + électrique », selon les différents paramètres de fonctionnement du dispositif selon l'invention (voir *supra).*

On remarquera en outre que cette configuration permet, de manière très avantageuse, de supprimer l'effet de décélération occasionné par un passage de vitesse.

En effet, cette configuration permet, lorsque qu'on débraye l'embrayage 3 afin de passer une vitesse, de maintenir l'arbre de transmission secondaire 2 sous couple, grâce à la puissance mécanique fournie par la machine électrique ME. On évite ainsi le tangage du véhicule lié au passage d'une vitesse, appelé « effet salut » par les spécialistes.

Sur la figure 5, le dispositif selon l'invention est représenté en configuration de fonctionnement « tout électrique » ou « de freinage à récupération d'énergie ».

Dans cette configuration, l'embrayage 3 est en position débrayée, le deuxième pignon fou 18 est craboté sur l'arbre de transmission secondaire 2, et les autres crabots 7, 8, 17 ne crabotent pas.

Cette configuration permet:
- de propulser le véhicule en mode « tout électrique », c'est-à-dire uniquement à partir de la puissance fournie par la machine électrique ME qui fonctionne en moteur électrique, ou
- de récupérer une partie de l'énergie de freinage transmise par la roue 9 à l'arbre de transmission secondaire 2, et d'utiliser cette énergie pour faire tourner la machine électrique ME (qui fonctionne alors en alternateur) afin de recharger les batteries.

Là aussi, on voit que le dispositif selon l'invention permet de « court-circuiter » les premier 5 et deuxième 6 trains de pignons, et ainsi d'éviter toute déperdition inutile d'énergie.

Comme on peut le comprendre à présent, le dispositif selon l'invention permet de combiner les avantages des deux catégories de dispositifs de la technique antérieure (voir préambule de la présente description).

On obtient ainsi, au moindre coût et avec un encombrement limité, un dispositif de traction du type « hybride parallèle » permettant une amélioration sensible à la fois du bilan énergétique - et donc de la consommation et de la pollution - du véhicule, ainsi que de son confort.

Bien entendu, la présente invention n'est pas limitée au mode de réalisation décrit et représenté ci-dessus, fourni à titre illustratif et non limitatif.

C'est ainsi par exemple que l'on pourrait monter la machine électrique coaxialement sur l'arbre de transmission secondaire, en prise directe avec le deuxième pignon fou.

C'est ainsi également que l'on pourrait monter la machine électrique à l'écart des arbres de transmission primaire et secondaire. Dans ce cas, il faudrait envisager des moyens de couplage mécanique de cette machine électrique au premier ou au deuxième pignon fou.

C'est ainsi également que l'on pourrait utiliser un système de transmission:
- dans lequel les différents couplages mécaniques sont réalisés par des synchroniseurs à verrouillage,
- comprenant plusieurs arbres de transmission primaires et/ou secondaires; dans ce cas, la machine électrique peut être couplée à au moins un arbre de transmission primaire et à au moins un arbre de transmission secondaire,
- du type à trains d'engrenages planétaires, ou
- du type à poulies et à courroie (système CVT, c'est à dire à Transmission Variable Continue). Dans ce cas, le dispositif selon l'invention permet d'effectuer les variations de démultiplication du CVT en position débrayée, donc avec une dépense d'énergie moindre et plus rapidement (notamment pour des reprises sans temps de réponse). Durant cette phase, le couple est transmis aux roues par la machine électrique pour éviter de ressentir la rupture de traction.

## Revendications

1. Dispositif de traction du type « hybride parallèle », notamment pour véhicule automobile (10), comprenant:
a) une chaîne de traction mécanique comportant un moteur thermique (MT), un système de transmission comportant au moins un arbre de transmission primaire (1) pouvant être couplé mécaniquement audit moteur (MT) et au moins un arbre de transmission secondaire (2) pouvant être couplé mécaniquement audit arbre de transmission primaire (1) pour entraîner au moins une roue (9) dudit véhicule (10),
b) une machine électrique fonctionnant en moteur ou en alternateur (ME), pouvant sélectivement combiner sa puissance mécanique à celle de ladite chaîne de traction mécanique, ou utiliser au moins une partie de la puissance mécanique de cette chaîne pour recharger des moyens de stockage d'énergie électrique tels que des batteries (20),
ce dispositif étant caractérisé en ce que ladite machine électrique (ME) peut être sélectivement couplée mécaniquement audit arbre de transmission primaire (1) ou audit arbre de transmission secondaire (2).

2. Dispositif selon la revendication 1, caractérisé en ce que ladite machine électrique (ME) est couplée mécaniquement à des premier (15) et deuxième (16) pignons montés fous respectivement sur lesdits arbres de transmission primaire (1) et secondaire (2), et en ce que lesdits pignons (15, 16) peuvent être crabotés sélectivement sur lesdits arbres (1, 2).

3. Dispositif selon la revendication 2, caractérisé en ce que ladite machine électrique (ME) est montée coaxialement sur ledit arbre de transmission primaire (1), en prise directe avec ledit premier pignon fou (15).

4. Dispositif selon la revendication 3, caractérisé en ce que lesdits moyens d'accouplement mécanique dudit arbre de transmission primaire (1) audit moteur thermique (MT) sont placés entre ledit moteur thermique (MT) et ladite machine électrique (ME).

5. Dispositif selon la revendication 2, caractérisé en ce que ladite machine électrique (ME) est montée coaxialement sur ledit arbre de transmission secondaire (2), en prise directe avec ledit deuxième pignon fou (16).

6. Dispositif selon la revendication 2, caractérisé en ce que ladite machine électrique (ME) est montée à l'écart desdits arbres de transmission primaire (1) et secondaire (2).

7. Dispositif selon l'une quelconque des revendications précédentes, caractérisé en ce que ledit système de transmission est du type à poulies et à courroie, c'est-à-dire du type à Transmission Variable Continue (CVT).

8. Dispositif selon l'une quelconque des revendications précédentes, caractérisé en ce que ledit système de transmission est une boîte de vitesses.

9. Dispositif selon la revendication 8 lorsqu'elle dépend de la revendication 2, caractérisé en ce que ladite boîte de vitesses et les moyens (17, 18) pour craboter lesdits premier (15) et deuxième (16) pignons fous sont robotisés.

10. Dispositif selon l'une quelconque des revendications précédentes, caractérisé en ce que lesdits moyens d'accouplement mécanique dudit arbre de transmission primaire (1) audit moteur thermique (MT) sont un embrayage (3).

11. Véhicule automobile (10), caractérisé en ce qu'il est équipé d'un dispositif de traction du type « hybride parallèle » conforme à l'une quelconque des revendications précédentes.
